# FASCICULE DE BREVET EUROPEEN

(11) **EP 2 457 424 B1**
(45) Date de publication et mention de la délivrance du brevet: **23.10.2013**
(21) Numéro de dépôt: 11190934.7
(22) Date de dépôt: 28.11.2011
(51) Int. Cl.: A01B 3/46

(54) **Charrue semi-portée avec un organe de nettoyage de roue perfectionné**
Aufsattelpflug mit einem verbesserten Radreinigungsteil
Semi-mounted plough with an improved wheel cleaning part

(30) Priorité: 30.11.2010 FR 1059912
(43) Date de publication de la demande: 30.05.2012
(73) Titulaire: Kuhn-Huard S.A., 44142 Châteaubriant (FR)
(72) Inventeur: Perrinel, Christian, 44110 Châteaubriant (FR); Herault, Vincent, 44470 Mauves sur Loire (FR)
(74) Mandataire: Esch, Esther Evelyne

(56) Documents cités:
- EP-A1- 2 158 798
- FR-A1- 2 400 310
- FR-A1- 2 851 120

## Description

La présente invention se rapporte au domaine technique général du machinisme agricole et en particulier au domaine des charrues. L'invention concerne une charrue semi-portée destinée à être reliée à un tracteur au moyen d'une tête d'attelage et comportant un bâti portant des corps de labour et au moins une roue d'appui liée audit bâti via un chariot, chaque roue d'appui roulant sur le sol en pivotant autour d'un axe de roue sensiblement horizontal et étant munie d'un organe de nettoyage.

Une telle charrue est présentée dans la demande de brevet FR2 851 120A1. Cette charrue connue comporte un bâti supportant sept corps de labour et une roue d'appui. Il s'agit d'une charrue de grande largeur, elle est semi-portée. Cette roue d'appui est amenée à rouler sur le sol en pivotant autour d'un axe de rotation sensiblement horizontal lors du travail et lors des déplacements ou manoeuvres. La roue d'appui est liée au bâti au moyen d'un chariot et est équipée d'un organe de nettoyage. Grâce à l'organe de nettoyage, la charrue pourra être utilisée même dans des conditions de sols humides et collants. L'organe de nettoyage évite que la roue d'appui ou plutôt le pneumatique s'encrasse ce qui garantit une profondeur de labour constante. L'organe de nettoyage est fixé rigidement sur le chariot. Lors de l'utilisation de la charrue, la roue d'appui passe d'une position de travail à une position de manoeuvre ou à une position de transport et inversement au moyen d'un vérin. La roue d'appui et le chariot pivotent vers le bas pour sortir les corps de labour de terre pour effectuer un demi-tour en fin de champ. L'organe de nettoyage étant monté de manière fixe sur le chariot, il se rapproche du sol lors des manoeuvres de demi-tour. L'organe de nettoyage intervient dans le quart arrière et supérieur de la roue. Avec cette position au-dessus de l'axe de rotation, les débris de plantes et la terre sont entraînés vers le haut par la rotation de la roue. Ils ne retombent pas au sol mais se déposent sur le chariot et même sur le bâti. De grosses mottes sont ainsi formées sur le bâti. En s'accumulant sur le chariot, la terre et les débris risquent d'obstruer l'intervalle entre le pneu et le chariot au point que la rotation de la roue d'appui soit bloquée et glisse sur le sol.

La présente invention a pour but de remédier aux inconvénients précités. Elle doit notamment proposer une charrue semi-portée avec au moins une roue d'appui équipée d'un organe de nettoyage plus efficace au travail et qui ne perturbe pas le fonctionnement durant les manoeuvres de demi-tour et le transport.

A cet effet, une importante caractéristique de l'invention consiste en ce que ledit organe de nettoyage s'étend, vu transversalement à la direction d'avance, dans le quart arrière et inférieur de ladite roue d'appui et que ledit organe de nettoyage est lié audit bâti au moyen d'un dispositif de liaison. Dans le quart arrière et inférieur de ladite roue d'appui, l'organe de nettoyage est dans une position idéale puisqu'il intervient proche du sol. En étant solidaire du bâti de la charrue, l'organe de nettoyage est indépendant du chariot. Il n'entrave pas le déplacement de la charrue lors des demi-tours et lors du transport.

Selon une autre caractéristique importante de l'invention, l'organe de nettoyage est maintenu dans le quart arrière et inférieur de la roue d'appui au moyen du dispositif de liaison. Pour passer de la position de travail à la position de manoeuvre ou de transport et inversement, c'est le dispositif de liaison qui absorbe le changement de position du chariot. La position en hauteur de l'organe de nettoyage par rapport au sol reste de ce fait sensiblement identique.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente, en vue de côté, une charrue selon la présente invention attelée à un tracteur dans une position de travail,
- la **figure 2** est une vue de détail de la roue de la charrue de la figure 1,
- la **figure 3** représente une vue latérale de la charrue attelée à un tracteur dans une position de manoeuvre de demi-tour,
- la **figure 4** est une vue de détail de la roue de la charrue de la figure 3,
- la **figure 5** est une vue de dessus de la charrue au travail.

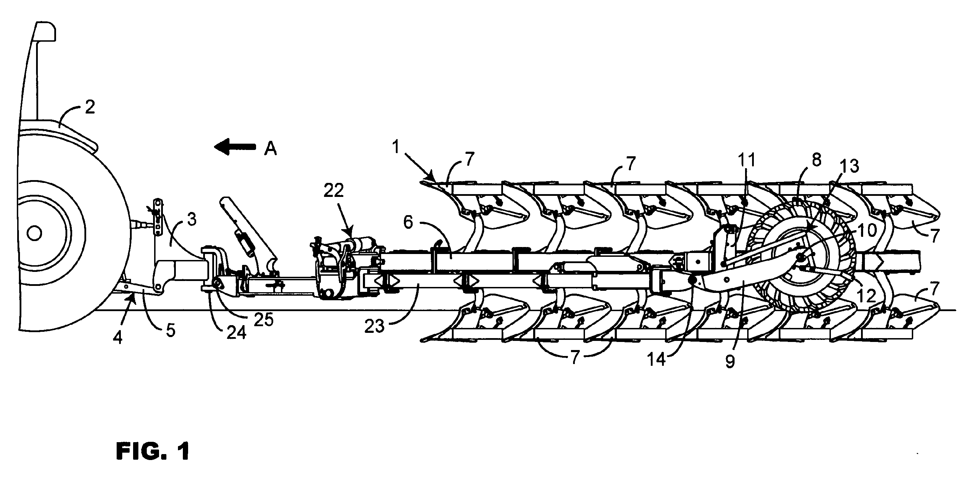

La machine agricole représentée sur les figures est une charrue (1). Elle permet de labourer la terre. La charrue (1) est destinée à être reliée à un tracteur (2) au moyen d'une tête d'attelage (3). La charrue (1) est reliée en particulier au système de relevage (4) du tracteur (2) par l'intermédiaire des bras inférieurs (5). Le tracteur (2) tire la charrue (1) suivant une direction d'avance indiquée par la flèche (A). Dans la suite de la description, les notions suivantes "avant", "arrière" et "devant", "derrière" sont définies par rapport au sens d'avance (A). La charrue (1) comporte un bâti (6) portant des corps de labour (7) et au moins une roue d'appui (8) liée au bâti (6) par l'intermédiaire d'un chariot (9). La charrue (1) est représentée dans une position de travail sur la figure 1. Chaque corps de labour (7) est destiné à travailler une bande de terre. Les corps de labour (7) sont des pièces travaillantes qui découpent, soulèvent et retournent la bande de terre. La charrue de l'invention est une charrue semi-portée.

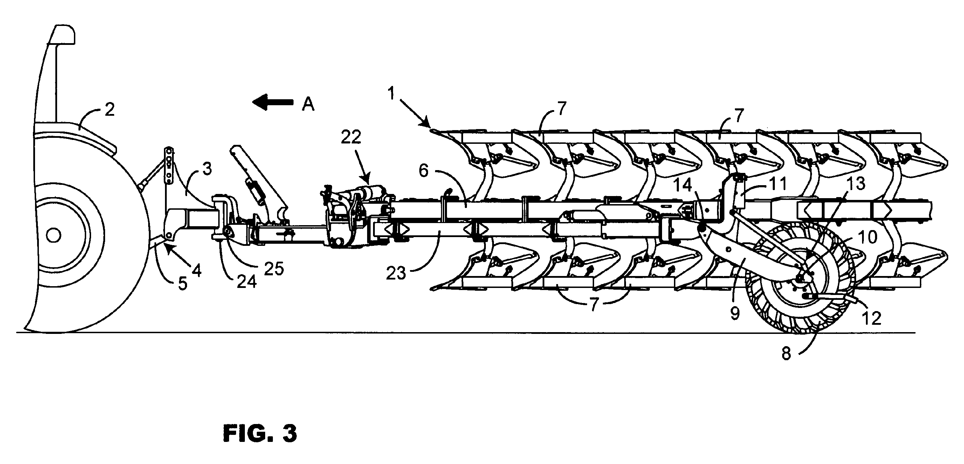

Le bâti (6) porte huit corps de labour (7) et permet de travailler une très grande largeur. Seulement les six premiers corps de labour (7) ont été représentés sur les figures 1 et 3. Ladite au moins une roue d'appui (8) permet d'une part de contrôler la profondeur des corps de labour (7) durant le travail et d'autre part de sortir les corps de labour (7) de terre pour effectuer les manoeuvres en bout de champ. La charrue est représentée dans la position de manoeuvre sur la figure 3. Elle porte aussi la charrue (1) lors du transport. Le bâti (6) s'appuie sur le sol par l'intermédiaire d'une ou de deux roues d'appui (8) lors du travail, lors des manoeuvres et lors du transport. Chaque roue d'appui (8) roule sur le sol en pivotant autour d'un axe de roue (10) sensiblement horizontal et perpendiculaire à la direction d'avance (A). L'orientation de l'axe de roue (10) est sensiblement identique à l'orientation du tracteur (2). La roue d'appui (8) est apte à déplacer le bâti (6) en hauteur par rapport au sol au moyen d'un actionneur (11). L'actionneur (11) est susceptible de déplacer le bâti (6) entre une position basse de travail et une position haute de manoeuvres ou de transport, et vice versa. L'actionneur (11) s'étend entre le bâti (6) et le chariot (9). Pour une utilisation dans des conditions très variées et limiter les bourrages dans des sols plutôt collants, chaque roue d'appui (8) est munie d'un organe de nettoyage (12). La fonction de l'organe de nettoyage (12) est de décrotter la roue d'appui (8) afin d'éviter l'accumulation de terre sur la roue d'appui (8) et notamment sur son pneumatique.

Selon une importante caractéristique de l'invention, l'organe de nettoyage (12) est disposé, vu transversalement à la direction d'avance (A), dans le quart arrière et inférieur de la roue d'appui (8) correspondante et que ledit organe de nettoyage (12) est lié audit bâti (6) au moyen d'un dispositif de liaison (13). En étant disposé dans le quart arrière et inférieur de la roue d'appui (8), l'organe de nettoyage (12) s'étend idéalement pour assurer un bon décrottage. L'organe de nettoyage (12) s'étend relativement proche du sol. Comme l'organe de nettoyage (12) s'étend en dessous d'un plan horizontal passant par l'axe de roue (10), la terre et les débris ne sont pas entraînés vers le haut par la rotation de la roue d'appui (8) mais les débris et la terre retombent directement sur le sol après le décrottage. Grâce au dispositif de liaison (13), la position de l'organe de nettoyage (12) sur la roue d'appui (8) est dépendante de la position du bâti (6). L'organe de nettoyage (12) ne suit pas le mouvement du chariot (9) pour passer d'une position de travail à une position de manoeuvre. Le dispositif de liaison (13) absorbe le changement de position sans le transmettre à l'organe de nettoyage (12). Quelle que soit la position de la charrue (1) ou du chariot (9), le dispositif de liaison (13) maintient l'organe de nettoyage (12) dans le quart arrière et inférieur de la roue d'appui (8) sans interférence avec le sol. L'organe de nettoyage (12) est maintenu, durant les manoeuvres ou le transport, sensiblement à la même distance par rapport au sol que lors du travail. Lors des demi-tours ou du transport, l'organe de nettoyage (12) est ainsi maintenu à une distance suffisante du sol pour ne pas perturber le déplacement de la charrue (1). Il n'entre pas en contact avec le sol lorsque le chariot (9) pivote vers le bas. Selon une alternative, l'organe de nettoyage (12) s'éloigne du sol dans la position de manoeuvre, ce qui permet un niveau de sécurité plus important en marche arrière.

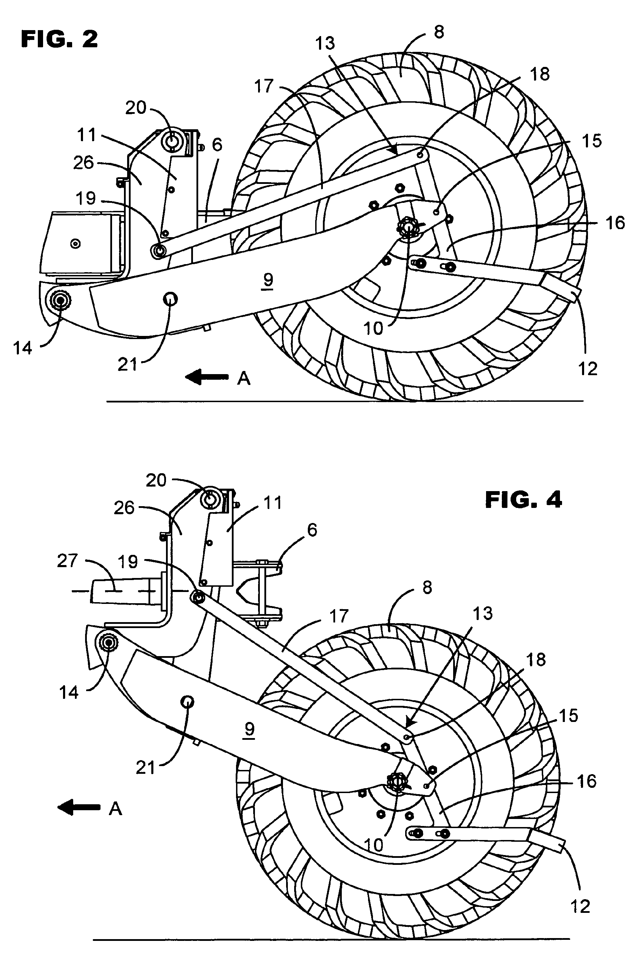

D'après les figures 2 et 4, l'organe de nettoyage (12) s'étend vers l'arrière et vers le bas par rapport à l'axe de roue (10). Il est disposé dans la moitié la plus en arrière de la roue d'appui (8) et dans le quart inférieur sensiblement en dessous d'un plan horizontal passant par l'axe de roue (10). Lors du passage d'une position de travail à une position de manoeuvre, c'est la roue d'appui (8) qui est amenée à pivoter vers le bas autour d'une articulation principale (14) sous l'effet de l'actionneur (11). L'articulation principale (14) reliant le chariot (9) de la roue d'appui (8) au bâti (6). Cette articulation principale (14) présente un axe sensiblement horizontal et perpendiculaire à la direction d'avance (A). L'axe de l'articulation principale (14) est sensiblement parallèle à l'axe de roue (10). On peut remarquer que l'organe de nettoyage (12) s'éloigne du pneumatique de la roue d'appui (8) sur la figure 4. Ce dégagement permet un déplacement de la charrue au transport à une vitesse plus élevée. La position de l'organe de nettoyage (12) par rapport au pneumatique de la roue d'appui (8) peut être réglable ou être fixe.

Dans l'exemple de réalisation représenté, l'organe de nettoyage (12) est articulé sur le chariot (9) au moyen d'une première articulation (15) d'axe sensiblement horizontal et perpendiculaire à la direction d'avance (A). Le dispositif de liaison (13) comporte une bielle (16) et une tringle (17). La bielle (16) est liée à la tringle (17) au moyen d'une deuxième articulation (18) d'axe sensiblement horizontal et perpendiculaire à la direction d'avance (A). L'organe de nettoyage (12) est monté sur la bielle (16) de manière réglable pour être rapproché ou éloigné du pneumatique afin d'être plus ou moins efficace pour le décrottage. La bielle (16) est reliée au chariot (9) au moyen de la première articulation (15). La tringle (17) est, pour sa part, liée au bâti (6) au moyen d'une troisième articulation (19) d'axe sensiblement horizontal et perpendiculaire à la direction d'avance (A). La première articulation (15) s'étend sensiblement derrière l'axe de roue (10) compte tenu de la direction d'avance (A). Sur la figure 2, on remarque que les articulations (15, 18 et 19) reliant la bielle (16) à la tringle (17) s'étendent de manière à former sensiblement un angle droit dans la position de travail. Dans la position de manoeuvre correspondant aussi à la position de transport représentée sur la figure 4, ces articulations (15, 18 et 19) forment un angle ouvert, de plus de 90°. La première articulation (15) s'étant éloignée de la troisième articulation (19) par le pivotement vers le bas du chariot (9). Les trois articulations (15, 18 et 19) sont sensiblement alignées.

Selon une alternative non représentée, l'organe de nettoyage (12) est articulé sur l'axe de roue (10) de la roue d'appui (8).

L'actionneur (11) est lié au bâti (6) via une quatrième articulation (20) d'axe sensiblement horizontal et perpendiculaire à la direction d'avance (A) et est lié au chariot (9) via une cinquième articulation (21) d'axe sensiblement horizontal et perpendiculaire à la direction d'avance (A). L'actionneur (11) est avantageusement un vérin du type à double effet.

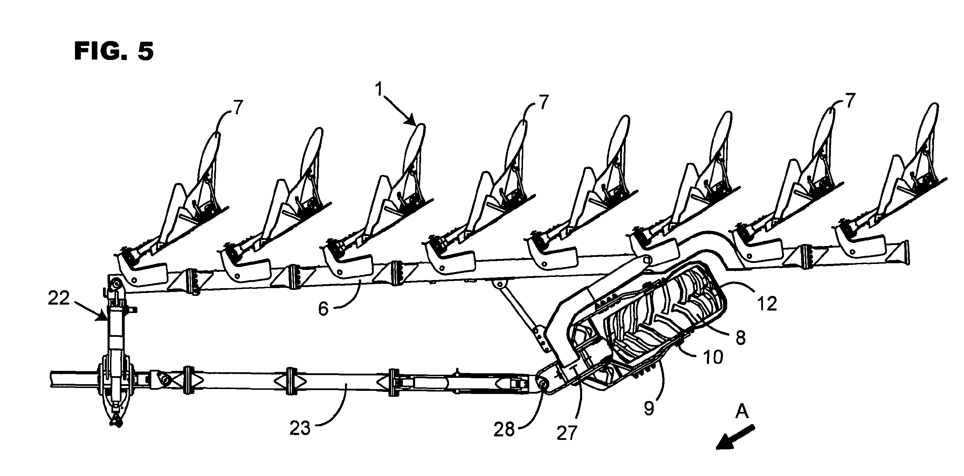

A la lumière des figures 1 et 3, cette charrue est réversible, elle comporte un dispositif de retournement (22) et un timon (23). Sous l'action du dispositif de retournement (22), le bâti (6) est capable de pivoter par rapport à un axe longitudinal matérialisé par le timon (23) pour passer d'une position de travail à une autre. Ainsi, les corps de labour droit et gauche sont mis successivement en service par rotation du bâti (6) d'un demi-tour. En fin de champ lorsque le bâti (6) est soulevé pour effectuer la manoeuvre de retournement, les corps de labour (7) sortent de terre. La figure 5 montre une vue de dessus de la charrue (1) en position de travail avec ses huit corps de labour (7). Le dispositif de retournement (22) permet de relier le bâti (6) au timon (23). Le timon (23) est disposé entre la tête d'attelage (3) et le bâti (6). Le timon (23) est relié à l'avant par l'intermédiaire d'un axe vertical (24) suivi d'un axe transversal (25) sensiblement horizontal sur la tête d'attelage (3). L'axe vertical (24) permet un meilleur suivi du tracteur (2) notamment dans les fourrières et l'axe transversal (25) autorise un débattement du bâti (6) pour mieux suivre le relief du terrain. Pour permettre le pivotement du bâti (6), le chariot (9) est lié au bâti (6) au moyen d'un support (26). Le support (26) est relié au chariot (9) par l'intermédiaire de l'articulation principale (14). Le support (26) présente un axe de rotation (27) qui permet au bâti (6) de passer d'une position de travail à l'autre position de travail. L'axe de rotation (27) est sensiblement horizontal et parallèle à la direction d'avance (A).

Dans un mode de réalisation, le dispositif de liaison (13) est un système hydraulique ou électrique.

Dans l'exemple de réalisation représenté, la charrue est une charrue semi-portée monoroue. Cette charrue (1) s'appuie sur le sol via une seule roue d'appui (8). Le timon (23) est relié à l'arrière par l'intermédiaire d'une articulation verticale (28) à ladite roue d'appui (8).

Dans un exemple de réalisation non représenté, la charrue de l'invention est une charrue semi-portée dont le poids est supporté par un essieu avec deux roues d'appui (8). Une telle charrue permet de travailler une très grande largeur, elle comporte plus de huit corps de labour (7).

Il est bien évident que l'invention n'est pas limitée au mode de réalisation décrit ci-dessus et représenté sur les dessins annexés. Des modifications restent possibles sans pour autant sortir du domaine de protection tel qu'il est défini par les revendications suivantes.

## Revendications

1. Charrue (1) semi-portée destinée à être reliée à un tracteur (2) au moyen d'une tête d'attelage (3) et comportant un bâti (6) portant des corps de labour (7) et au moins une roue d'appui (8) liée audit bâti (6) via un chariot (9), chaque roue d'appui (8) roulant sur le sol en pivotant autour d'un axe de roue (10) sensiblement horizontal et étant munie d'un organe de nettoyage (12), ***caractérisée en ce que*** ledit organe de nettoyage (12) s'étend, vu transversalement à la direction d'avance (A), dans le quart arrière et inférieur de ladite roue d'appui (8) et que ledit organe de nettoyage (12) est lié audit bâti (6) au moyen d'un dispositif de liaison (13).

2. Charrue selon la revendication 1, ***caractérisée en ce que*** chaque roue d'appui (8) est susceptible de passer d'une position de travail à une position de transport ou à une position de manoeuvre, et inversement au moyen d'un actionneur (11) en pivotant autour d'une articulation principale (14) et que ledit dispositif de liaison (13) permet de maintenir ledit organe de nettoyage (12) dans le quart arrière et inférieur de ladite roue d'appui (8) sans interférence avec le sol.

3. Charrue selon la revendication 1 ou 2, ***caractérisée en ce que*** ledit organe de nettoyage (12) est articulé sur l'axe de roue (10) de ladite roue d'appui (8).

4. Charrue selon la revendication 1 ou 2, ***caractérisée en ce que*** ledit organe de nettoyage (12) est articulé sur ledit chariot (9) au moyen d'une première articulation (15) d'axe parallèle à l'axe de roue (10).

5. Charrue selon la revendication 4, ***caractérisée en ce que*** ladite première articulation (15) s'étend derrière l'axe de roue (10) compte tenu de la direction d'avance (A).

6. Charrue selon l'une quelconque des revendications 1 à 5, ***caractérisée en ce que*** la position de l'organe de nettoyage (12) par rapport à ladite roue d'appui (8) est réglable.

7. Charrue selon l'une quelconque des revendications 1 à 5, ***caractérisée en ce que*** la position de l'organe de nettoyage (12) par rapport à ladite roue d'appui (8) est fixe.

8. Charrue selon l'une quelconque des revendications 1 à 7, ***caractérisée en ce que*** ledit dispositif de liaison (13) comporte une bielle (16) et une tringle (17), ladite bielle (16) étant liée à ladite tringle (17) au moyen d'une deuxième articulation (18) d'axe sensiblement horizontal.

9. Charrue selon la revendication 8, ***caractérisée en ce que*** ladite bielle (16) est liée audit chariot (9) via ladite première articulation (15) et que ladite tringle (17) est liée audit bâti (6) via une troisième articulation (19) d'axe sensiblement horizontal.

10. Charrue selon l'une quelconque des revendications 1 à 9, ***caractérisée en ce que*** ladite charrue (1) est réversible et que ledit chariot (9) est lié audit bâti (6) au moyen d'un support (26) et que ledit support (26) présente un axe de rotation (27) sensiblement horizontal et parallèle à la direction d'avance (A).

11. Charrue selon l'une quelconque des revendications 1 à 10, ***caractérisée en ce que*** ledit dispositif de liaison (13) est un système hydraulique ou électrique.

## Patentansprüche

1. Aufsattelpflug (1), der dazu bestimmt ist, mit einem Traktor (2) mittels eines Kupplungskopfes (3) verbunden zu werden, und mit einem Gestell (6), das Pflugkörper (7) trägt, und mindestens einem Stützrad (8), das mit dem Gestell (6) über einen Wagen (9) verbunden ist, wobei jedes Stützrad (8) auf dem Boden fährt, wobei es um eine im Wesentlichen horizontale Radachse (10) schwenkt, und mit einem Reinigungselement (12) versehen ist, ***dadurch gekennzeichnet,* dass** sich das Reinigungselement (12) quer zur Vorschubrichtung (A) gesehen in dem hinteren und unteren Viertel des Stützrades (8) erstreckt, und dass das Reinigungselement (12) mit dem Gestell (6) mittels einer Verbindungsvorrichtung (13) verbunden ist.

2. Pflug nach Anspruch 1, ***dadurch gekennzeichnet,* dass** jedes Stützrad (8) von einer Arbeitsstellung in eine Transport- oder in eine Betätigungsstellung und umgekehrt mittels eines Betätigungselements (11) übergehen kann, wobei es um ein Hauptgelenk (14) schwenkt, und dass es die Verbindungsvorrichtung (13) ermöglicht, das Reinigungselement (12) im hinteren und unteren Viertel des Stützrades (8) ohne Kontakt mit dem Boden zu halten.

3. Pflug nach Anspruch 1 oder 2, ***dadurch gekennzeichnet,* dass** das Reinigungselement (12) an der Radachse (10) des Stützrades (8) angelenkt ist.

4. Pflug nach Anspruch 1 oder 2, ***dadurch gekennzeichnet,* dass** das Reinigungselement (12) auf dem Wagen (9) mittels eines ersten Gelenks (15) mit einer Achse parallel zur Radachse (10) angelenkt ist.

5. Pflug nach Anspruch 4, ***dadurch gekennzeichnet,* dass** sich das erste Gelenk (15) hinter der Radachse (10) bei Betrachtung der Vorschubrichtung (A) erstreckt.

6. Pflug nach irgend einem der Ansprüche 1 bis 5, ***dadurch gekennzeichnet,* dass** die Stellung des Reinigungselements (12) in Bezug zum Stützrad (8) einstellbar ist.

7. Pflug nach irgend einem der Ansprüche 1 bis 5, ***dadurch gekennzeichnet,* dass** die Stellung des Reinigungselements (12) in Bezug zum Stützrad (8) fest ist.

8. Pflug nach irgend einem der Ansprüche 1 bis 7, ***dadurch gekennzeichnet,* dass** die Verbindungsvorrichtung (13) ein Zwischenglied (16) und ein Gestänge (17) aufweist, wobei das Zwischenglied (16) mit dem Gestänge (17) mittels eines zweiten Gelenks (18) mit im Wesentlichen horizontaler Achse verbunden ist.

9. Pflug nach Anspruch 8, ***dadurch gekennzeichnet,* dass** das Zwischenglied (16) mit dem Wagen (9) über das erste Gelenk (15) verbunden ist, und dass das Gestänge (17) mit dem Gestell (6) über ein drittes Gelenk (19) mit im Wesentlichen horizontaler Achse verbunden ist.

10. Pflug nach irgend einem der Ansprüche 1 bis 9, ***dadurch gekennzeichnet,* dass** der Pflug (1) drehbar ist, und dass der Wagen (9) mit dem Gestell (6) mittels einer Stütze (26) verbunden ist, und dass die Stütze (26) eine im Wesentlichen horizontale Drehachse (27) parallel zur Vorschubrichtung (A) aufweist.

11. Pflug nach irgend einem der Ansprüche 1 bis 10, ***dadurch gekennzeichnet,* dass** die Verbindungsvorrichtung (13) ein hydraulisches oder elektrisches System ist.

## Claims

1. Semi-mounted plough (1) intended to be hitched to a tractor (2) by means of a coupling head (3) and comprising a frame (6) carrying plough bodies (7) and at least one support wheel (8) linked to the said frame (6) via a carriage (9), each support wheel (8) rolling on the ground by pivoting about a substantially horizontal wheel axle (10) and being provided with a cleaning element (12), ***characterized in* that** the said cleaning element (12) extends, viewed transversely to the direction of advance (A), in the rear and lower quarter of the said support wheel (8) and that the said cleaning element (12) is linked to the said frame (6) by means of a connecting device (13).

2. Plough according to Claim 1, ***characterized in* that** each support wheel (8) is able to pass from a work position to a transport position or to a manoeuvring position, and conversely by means of an actuator (11) by pivoting about a main articulation (14) and that the said connecting device (13) makes it possible to keep the said cleaning element (12) in the rear and lower quarter of the said support wheel (8) without interference with the ground.

3. Plough according to Claim 1 or 2, ***characterized in* that** the said cleaning element (12) is articulated on the wheel axle (10) of the said support wheel (8).

4. Plough according to Claim 1 or 2, ***characterized in* that** the said cleaning element (12) is articulated on the said carriage (9) by means of a first articulation (15) with an axis parallel to the wheel axle (10).

5. Plough according to Claim 4, ***characterized in* that** the said first articulation (15) extends behind the wheel axle (10) taking into account the direction of advance (A).

6. Plough according to any one of Claims 1 to 5, ***characterized in* that** the position of the cleaning element (12) with respect to the said support wheel (8) is adjustable.

7. Plough according to any one of Claims 1 to 5, ***characterized in* that** the position of the cleaning element (12) with respect to the said support wheel (8) is fixed.

8. Plough according to any one of Claims 1 to 7, ***characterized in* that** the said connecting device (13) comprises a connecting rod (16) and a bar (17), the said connecting rod (16) being linked to the said bar (17) by means of a second articulation (18) having a substantially horizontal axis.

9. Plough according to Claim 8, ***characterized in* that** the said connecting rod (16) is linked to the said carriage (9) via the said first articulation (15) and that the said bar (17) is linked to the said frame (6) via a third articulation (19) having a substantially horizontal axis.

10. Plough according to any one of Claims 1 to 9, ***characterized in* that** the said plough (1) is reversible and that the said carriage (9) is linked to the said frame (6) by means of a support (26) and that the said support (26) has a rotation axis (27) which is substantially horizontal and is parallel to the direction of advance (A).

11. Plough according to any one of Claims 1 to 10, ***characterized in* that** the said connecting device (13) is a hydraulic or electric system.
